# EUROPEAN PATENT SPECIFICATION

(11) **EP 0 756 361 B1**
(45) Date of publication and mention of the grant of the patent: **25.06.1997**
(21) Application number: 95111483.4
(22) Date of filing: 21.07.1995
(51) Int. Cl.: H01S 3/086, G01B 11/27

(54) **Method and arrangement for adjusting a mirror to a laser resonator**
Verfahren und Vorrichtung um einen Spiegel gegenüber einem Laserresonator zu justieren
Procédé et dispositif pour ajuster un miroir à un résonateur laser

(43) Date of publication of application: 29.01.1997
(73) Proprietor: Hewlett-Packard GmbH, D-71034 Böblingen (DE)
(72) Inventor: Zoll, Martin, D-75391 Gechingen (DE); Wunderling, Martin, D-71034 Böblingen (DE)
(74) Representative: Kurz, Peter

(56) References cited:
- EP-A- 0 087 179
- FR-A- 2 384 481
- PATENT ABSTRACTS OF JAPAN vol. 016 no. 230 (E-1208) ,27 May 1992 & JP-A-04 044375
- PATENT ABSTRACTS OF JAPAN vol. 014 no. 365 (E-0961) ,8 August 1990 & JP-A-02 129978
- PATENT ABSTRACTS OF JAPAN, vol.8, no.103 (E-244) 15/05/1984 &JP-A-59018691

## Description

The present invention relates to a method and an arrangement for adjusting a mirror to a laser resonator such that the light impinging on said mirror is reflected in itself.

For pre-adjusting of a laser resonator it is necessary to adjust the mirrors. The mirrors must be aligned to a laser beam impinging on the surface of the mirror such that the light is reflected in itself or, in other words in its longitudinal axis. This important adjustment step must be performed with a great accuracy. On the other hand for the manufacturing of a laser resonator this step should be performed as fast as possible.

JP-A-212 99 78 discloses a laser oscillation device in which the alignment of two mirrors is performed by use of an additional plate inserted in the optical path. The plate is also used for the rays of an auxiliary laser and the specified interference state after multiple repetition reflection within the resonator mirrors is detected with an detection apparatus. This enables on-line real-time control.

JP-A-4044375 discloses an alignment device for laser oscillator in which two visible rays projected in a screen are expressed by interference fringes. When misalignment occurs, the interference fringe increases the number of fringes. In this case, a total reflection side mirror and an output side mirror are adjusted so that they may be well aligned with each other. When the alignment is finished, the interference fringe will reduce the number of fringes. More specifically, when the interference fringe increases the reflection side mirror should be aligned with the output side mirror so that the number of fringes may be decreased. This allows to carry out accurate alignment.

JP-A-5908691 discloses an optical device for adjusting laser in which a semitransparent mirror is provided between a visible light source and a laser resonating system so as to form 45 degrees with respect to the light source. A part of a first light beam from the light source is reflected by the mirror and becomes a second light beam, which is inputted to a first screen. The remaining part of the first light beam is inputted to the resonating system through the semitransparent mirror, reflected by a total reflecting mirror and outputted from the resonating system as a third light beam. A part of this light beam is reflected by the semitransparent mirror and becomes a fourth light beam, which is inputted on a second screen. In this way, the second and fourth light beams can be separated into the screens. Then, the light source is adjusted so that a spot of the second light beam on the first screen is made to agree with the mark on this screen. Then an additional mirror is adjusted in the first and third light beams so that a spot of the reflected fourth light beam on the second screen is made to agree with the mark on the second screen. The device is used to perform highly accurate adjustment of a reflecting mirror by a simple structure, by providing a semitransparent mirror between a visible light source and a laser resonating system, and setting said semitransparent mirror at a specific angle with respect to the light source.

Thus the invention as claimed in Claims 1 and 3 is intended to provide a method and an arrangement which allows a save and fast adjustment of the mirror.

According to the present invention the method, as defined in Claim 1, for adjusting the mirror to the laser resonator comprises the following steps:
- circulating a laser beam of an auxiliary gas laser between said mirror to be adjusted and the output coupler mirror of said auxiliary gas laser,
- decoupling a part of the reflected laser beams of one direction and projecting said decoupled parts as different light dots on projecting means, and
- micropositioning said mirror to be adjusted until said different light dots which are influenced by said mirror are fused together to one light dot.

Since the mirror is not adjusted, the laser beams impinging on the surface of this mirror are not reflected in its longitudinal axis. Thus, the laser beam reflected by this mirror reaches the auxiliary mirror under a certain angle. The reflection on the surface of the auxiliary mirror leads to a laser beam which impinges on the mirror to be adjusted at another place than the first laser beam. By this, the laser beam circulates between the mirrors and reaches the mirrors by each impingement at another place. For adjustment the mirror in order to obtain only one laser beam which is reflected in itself and therefore reaches the surfaces of the mirrors at the same place, a small part of the reflected laser beams of one direction is decoupled while the main part passes through the decoupling means. The decoupled part is projected on appropriate projecting means. The above mentioned circulation of the laser beams effects that the decoupled part of each laser beam of one direction is presented as a separate light dot. The number of dots depends on the misadjustment of the mirror. In view of the decoupling, the intensity of the different light dots decreases from one to the next dot. It is possible to decouple a part either of the laser beams directed to the mirror to be adjusted or from the laser beams being reflected from this mirror. In the first case the projected dots comprise one additional dot which is effected by the first beam directed to the mirror to be adjusted. This dot cannot be used for the adjustment because it is not reflected by this mirror and thus contains no information about the misadjustment of the mirror. Ideally, only one dot is shown on the projecting means. For adjusting the mirror, the mirror is micropositionably displaced until the different light dots are fused together to one light dot.

With this method it is possible to exactly adjust the mirror because of the number of dots of the circulating laser beam between the mirrors. Another advantage is that this method can be easily automated by appropriate micro positioning means and an image processing system.

According to a preferred embodiment, a part of each laser beam reflected by the mirror to be adjusted is decoupled for projection. In a further preferred embodiment the laser beam is circulated between the mirror to be adjusted and the output coupler mirror of the auxiliary gas laser. This allows an exact reflection of the laser beams coming from the mirror to be adjusted.

The arrangement according to the invention, as defined in Claim 3, comprises an auxiliary gas laser source which laser beam is directed on said mirror such that the light reflected by said mirror reaches the output coupler mirror of said auxiliary gas laser, optical decoupling means being positioned in said laser beam between said laser and said mirror for decoupling a part of the light circulating between the mirrors, projecting means for projecting said decoupled light, and micro positioning means for displacing said mirror until said laser beam is reflected in its longitudinal axis. As optical decoupling means a glass plate in an inclined arrangement to the laser beam or a beam splitter cube as well-known decoupling means can be used. When using a glass plate without an antireflecting coating on one surface, both edges of the glass plate will decouple a small part of the respective laser beam. Therefore, it is advantageous to use a glass plate with an antireflection coating to provide only one set of dots projected on the projecting means. Additionally an appropriate lens should be inserted in the optical path in order to obtain sharply defined projected dots on the projecting means. For adjusting the mirror, the micro positioning means comprise a well-known XYZ-table or other appropriate arrangements well-known for persons skilled in the art. This arrangement can easily be combined with an image processing system.

These and other advantages and objects of the present invention can be taken from the following description of the preferred embodiments in accordance with the accompanying drawings, in which
- Figure 1: is a principal schematic depiction of the arrangement with a glass plate;
- Figure 2: the depiction of the arrangement of figure 1 with beam splitter cube instead of the glass plate; and
- Figure 3: projected light dots on the screen.

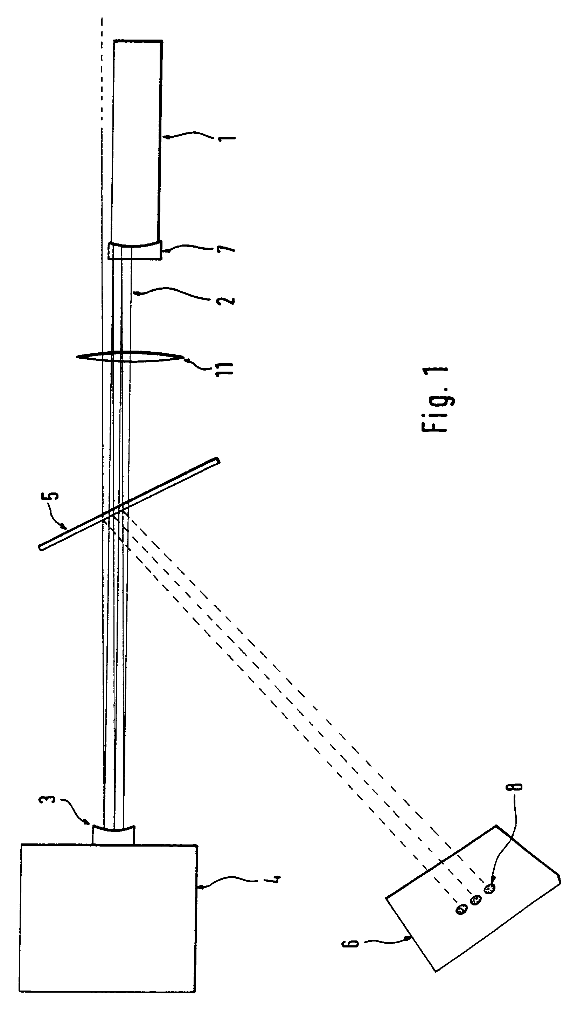

Figure 1 shows schematically the arrangement with the auxiliary gas laser 1, for example NeHe-laser, which generates a laser beam 2 directed to the mirror 3 to be adjusted. The mirror 3 is fixed to an XYZ-table 4 for micro positioning the mirror. In this simplified depiction the resonator to which the mirror is adjusted is not shown. Between gas laser 1 and the mirror 3 a glass plate 5 in an inclined arrangement is inserted in the optical path. The glass plate 5 has an antireflection coating which effects that as small part of the beam to be reflected by the mirror 3 is decoupled and projected on a ground glass screen 6. The main part of the laser beam passes through the glass plate 5 and lens 11 and impinges on the output coupler mirror 7 of the gas laser 1. In this figure, the laser beam 2 leaving the gas laser 1 reaches the mirror 3 and is reflected in view of the misadjustment of the mirror 3 under a certain angle. This reflected laser beam 2 passes with the main part the glass plate 5 and reaches the output coupler mirror 7 which reflects the laser beam again back to the mirror 3. By this way the laser beam circulates in this figure three times between the mirrors. Each pass through the glass plate 5 of the laser beam coming from the mirror 3 effects a decoupled part 2 which is projected as a light dot 8 on the ground glass screen 6. The number of the circulations and therefore the number of the dots 8 depends on the misadjustment of the mirror 3 which decides how often the laser beam reflected from the mirror 3 reaches the output coupler 7. The mirror 3 is exactly adjusted as soon as the light dots 8 are fused to only one light dot at the target on the ground glass screen 6.

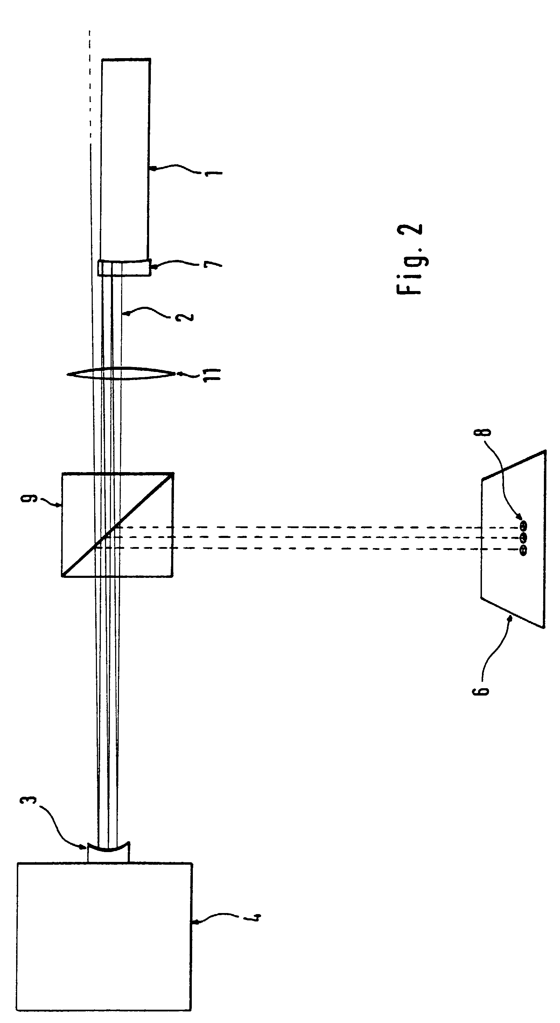

Figure 2 shows a similar arrangement with a beam splitter cube 9 instead of the glass plate 5 of figure 1.

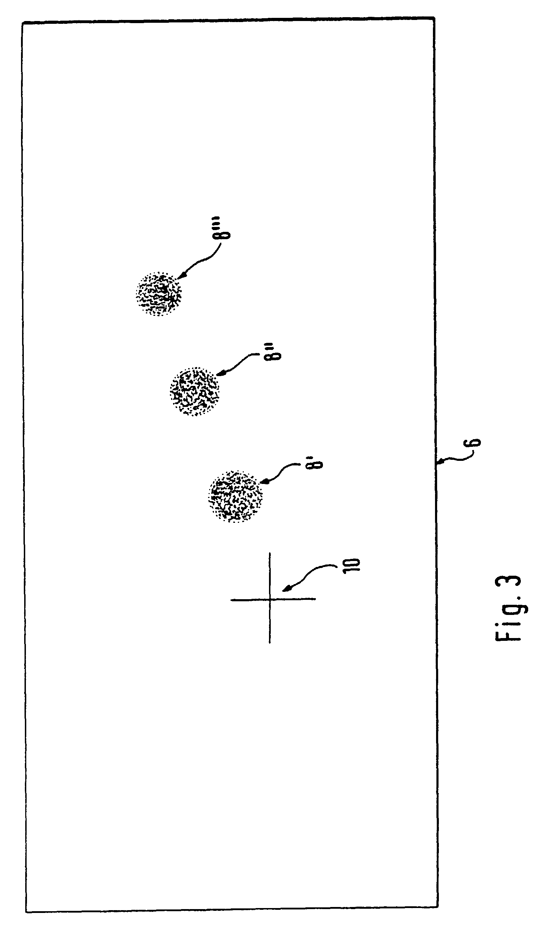

Figure 3 shows the ground glass screen 6 with three light dots 8', 8'', 8''' resulting from the first, second and third pass, respectively, of the laser beam reflected by the mirror 3 through the glass plate 5 or beam splitter cube 9. The intensity of the three dots decreases from one to the next in view of the losses and the reduced laser beam after passing the decoupling means. As soon as the mirror is adjusted such that the laser beam 2 generated by the gas laser 1 is reflected in itself, the three dots are lying upon each other at the target place 10.

## Claims

1. Method for adjusting a mirror (3) to a laser resonator of an auxiliary gas laser such that the light from the auxiliary gas laser (1) impinging on said mirror is reflected back on the same path by
- arranging the auxiliary gas laser (1) such that its output coupler mirror is opposing the mirror to be adjusted,
- reflecting a laser beam (2) of the auxiliary gas laser (1) between said mirror to be adjusted and the output coupler mirror (7) of said auxiliary gas laser, whereby, because of the misalignment of the mirror to be adjusted, the reflected laser beam reaches the mirrors upon each impingement at a different place such that a plurality of different laser beam paths is generated between the mirrors,
- decoupling a part of the light being reflected between the mirrors (3, 7) on said different laser beam paths in one direction and projecting said decoupled part which consists of the different laser beam paths of respective crossections as different light dots on projecting means (6), and
- micropositioning said mirror to be adjusted until said different light dots which are influenced by the position of said mirror (3) coincide to form one light spot.

2. Method according to claim 1, wherein a part of each laser beam reflected by said mirror is decoupled for projection.

3. Arrangement for adjusting a mirror (3) to a laser resonator of an auxiliary gas laser (1) such that the light from the auxiliary gas laser (1) impinging on said mirror is reflected back on the same path, comprising
- an auxiliary gas laser (1) source which has an output coupler mirror (7) opposing the mirror (3) to be adjusted such that a laser beam (2) of the auxiliary gas laser (1) is reflected between said mirror to be adjusted and the output coupler mirror (7) of said auxiliary gas laser (1), whereby, because of the misalignment of the mirror (3) to be adjusted, the reflected laser beam reaches the mirrors (3, 7) upon each impingement at a different place such that a plurality of different laser beam paths is generated between the mirrors,
- optical decoupling means (5, 9) being positioned between said mirrors for decoupling a part of the light being reflected between the mirrors of said different laser beam paths in one direction,
- projection means (6) for projecting said decoupled light part which consists of the different laser beam paths of respective crossections as different light dots (8), and
- micropositioning means for displacing said mirror (3) to be adjusted until said light dots coincide to form one light dot and the laser beam emitted from the auxiliary gas laser is reflected back on the same path.

4. Arrangement according to claim 3, wherein said decoupling means is a glass plate (5) having an antireflection coating on one surface.

5. Arrangement according to claim 3, wherein said decoupling means is a beam splitter cube (9).

6. Arrangement according to anyone of the preceding claims 3 to 5 wherein said projecting means is a groundglass screen (6).

## Patentansprüche

1. Verfahren zum Justieren eines Spiegels (3) auf einen Laserresonator eines Hilfsgaslasers derart, daß das auf diesen Spiegel von einem Hilfsgaslaser (1) auftreffende Licht auf denselben Pfad zurückreflektiert wird, indem
- der Hilfsgaslaser (1) derart angeordnet wird, daß der Auskoppelspiegel sich gegenüber dem zu justierenden Spiegel befindet,
- der Laserstrahl (2) des Hilfsgaslasers (1) zwischen dem zu justierenden Spiegel und dem Auskoppelspiegel (7) des Hilfsgaslasers reflektiert wird, indem aufgrund des Versatzes des zu justierenden Spiegels der reflektierte Laserstrahl die Spiegel bei jedem Auftreffen an verschiedenen Stellen erreicht, so daß eine Vielzahl von verschiedenen Laserstrahlpfaden zwischen den Spiegeln generiert wird,
- ein Teil des zwischen den Spiegeln (3, 7) reflektierten Lichts der verschiedenen Laserstrahlpfade in einer Richtung ausgekoppelt und diese ausgekoppelten Teile, die aus den verschiedenen Laserstrahlpfaden der betreffenden Schnittpunkte bestehen, als verschiedene Lichtflecken auf Projektionsmitteln (6) projiziert werden, und
- Mikropositionierung des zu justierenden Spiegels, bis diese verschiedenen Lichtflecken, die durch die Position des Spiegels (3) beeinflußt werden, in Form eines Lichtfleckens übereinstimmen.

2. Verfahren nach Anspruch 1, indem ein Teil jedes durch den Spiegel reflektierten Laserstrahls für die Projektion ausgekoppelt wird.

3. Anordnung zum Justieren eines Spiegels (3) auf einen Laserresonator eines Hilfsgaslasers (1) derart, daß das auf den Spiegel von dem Hilfsgaslaser (1) auftreffende Licht den gleichen Pfad zurückreflektiert wird, enthaltend
- einen Hilfsgaslaser (1) mit einem Auskoppelspiegel (7) gegenüber dem zu justierenden Spiegel (3), derart, daß ein Laserstrahl (2) des Hilfsgaslasers (1) zwischen dem zu justierenden Spiegel und dem Auskoppelspiegel (7) des Hilfsgaslasers (1) reflektiert wird, wobei aufgrund des Versatzes des zu justierenden Spiegels (3) der reflektierte Laserstrahl die Spiegel (3, 7) bei jedem Auftreffen an verschiedenen Stellen erreicht, so daß eine Vielzahl von verschiedenen Laserstrahlpfaden zwischen den Spiegeln erzeugt werden,
- optische Auskoppelmittel (5, 9) zwischen den Spiegeln, um einen Teil des reflektierten Lichts zwischen den Spiegeln der verschiedenen Laserstrahlpfaden einer Richtung auszukoppeln,
- Projektionsmittel (6) zum projizieren dieses ausgekoppelten Lichtteils, der aus den verschiedenen Laserstrahlpfaden mit entsprechenden Querschnitten als verschiedene Lichtpunkte (8) besteht, und
- Mikropositioniermittel zum Verschieben dieses zu justierenden Spiegels (3) bis diese Lichtflecke übereinstimmen, um einen Lichtfleck zu bilden, und der von dem Hilfsgaslaser imitierte Laserstrahl den gleichen Pfad zurückreflektiert wird.

4. Anordnung nach Anspruch 3, bei der das Auskoppelmittel eine Glasplatte (5) mit einer Antireflektionsbeschichtung auf der Oberfläche ist.

5. Anordnung nach Anspruch 3, bei der das Auskoppelmittel ein Strahlteilerwürfel (9) ist.

6. Anordnung nach einem der vorangegangenen Ansprüche 3 - 5, bei der das Projektionsmittel eine Mattscheibe (6) ist.

## Revendications

1. Procédé pour ajuster un miroir (3) à un résonateur laser d'un laser à gaz auxiliaire de sorte que la lumière provenant du laser à gaz auxiliaire (1) frappant ledit miroir est renvoyée par réflexion sur le même chemin consistant
• à disposer le laser à gaz auxiliaire (1) de sorte que son miroir de couplage de sortie fait face au miroir à ajuster,
• à réfléchir un faisceau laser (2) du laser à gaz auxiliaire (1) entre ledit miroir à ajuster et le miroir de couplage de sortie (7) dudit laser à gaz auxiliaire, ainsi, en raison du mauvais alignement du miroir à ajuster, le faisceau laser réfléchi atteint les miroirs lors de chaque incidence en un endroit différent de sorte qu'une pluralité de chemins différents de faisceau laser sont créés entre les miroirs,
• à découpler une partie de la lumière réfléchie entre les miroirs (3,7) sur lesdits chemins différents de faisceau laser dans une direction et à projeter ladite partie découplée qui est constituée des différents chemins de faisceau laser de sections respectives sous forme de taches lumineuses différentes sur le moyen de projection (6), et
• à positionner de manière micrométrique ledit miroir à ajuster jusqu'à ce que lesdites taches lumineuses différentes qui sont influencées par la position dudit miroir (3) coïncident pour ne former qu'une seule tache lumineuse.

2. Procédé selon la revendication 1, dans lequel une partie de chaque faisceau laser réfléchi par ledit miroir est découplée en vue d'une projection.

3. Dispositif pour ajuster un miroir (3) à un résonateur laser d'un laser à gaz auxiliaire (1) de sorte que la lumière provenant du laser à gaz auxiliaire (1) frappant ledit miroir est renvoyée par réflexion sur le même chemin, comprenant :
• une source laser à gaz auxiliaire (1) qui possède un miroir de couplage de sortie (7) faisant face au miroir (3) à ajuster de sorte qu'un faisceau laser (2) du laser à gaz auxiliaire (1) est réfléchi entre ledit miroir ajusté et le miroir de couplage de sortie (7) dudit laser à gaz auxiliaire (1), ainsi, en raison du mauvais alignement du miroir (3) à ajuster, le faisceau laser réfléchi atteint les miroirs (3, 7) lors de chaque incidence en un endroit différent de sorte qu'une pluralité de chemins de faisceaux laser différents sont créées entre les miroirs,
• un moyen de découplage optique (5, 9) étant positionné entre lesdits miroirs afin de découpler une partie de la lumière qui est réfléchie entre les miroirs desdits chemins de faisceau laser différents dans une direction,
• un moyen de projection (6) pour projeter ladite partie de lumière découplée qui est constituée des différents chemins de faisceau laser de sections respectives, sous forme de tache lumineuse différente (8), et
• un moyen de positionnement micrométrique pour déplacer ledit miroir (3) à ajuster jusqu'à ce que lesdites taches lumineuses coïncident pour former une seule tache lumineuse et le faisceau laser émis à partir du laser à gaz auxiliaire est renvoyé par réflexion sur le même chemin.

4. Dispositif selon la revendication 3, dans lequel ledit moyen de découplage est une plaque en verre (5) possédant un revêtement antireflet sur une surface.

5. Dispositif selon la revendication 3, dans lequel ledit moyen de découplage est un cube de partage de faisceau (9).

6. Dispositif selon l'une quelconque des revendications précédentes 3 à 5 dans lequel ledit moyen de projection est un écran en verre dépoli (6).
